# EUROPEAN PATENT APPLICATION

(11) **EP 4 620 834 A1**
(43) Date of publication of application: **24.09.2025**
(21) Application number: 22970018.2
(22) Date of filing: 27.12.2022
(51) Int. Cl.: B64F 3/02, B64C 39/02, B64D 47/00, B64U 10/14, B64U 101/40

(54) **UNMANNED AERIAL VEHICLE, UNMANNED AERIAL VEHICLE CONTROL SYSTEM, AND UNMANNED AERIAL VEHICLE CONTROL METHOD**

(71) Applicant: Kubota Corporation, Osaka 556-8601 (JP)
(72) Inventor: ISHIKAWA, Naohiro, Sakai-shi, Osaka 590-0908 (JP); TESHIMA, Takeshi, Sakai-shi, Osaka 590-0908 (JP)
(74) Representative: Cabinet Beau de Loménie
(86) International application number: PCT/JP2022/048156
(87) International publication number: WO 2024/142224

(57) **Abstract**

The control system is a system for controlling a second unmanned aerial vehicle that flies while holding a first cable connected to a first unmanned aerial vehicle that performs work and a second cable extending from a cable reeling machine. The control system includes a sensing device that senses the surrounding environment and outputs sensor data, and a control device that controls the operation of the unmanned aerial vehicle. The control device is configured, during flight of the second unmanned aerial vehicle, to detect the first cable and the second cable based on the sensor data, and upon predicting that at least one of the first cable and the second cable will contact the ground or an obstacle on the ground, to change the trajectory of the second unmanned aerial vehicle to avoid the contact.

## Description

### TECHNICAL FIELD

The present disclosure relates to unmanned aerial vehicles, control systems for unmanned aerial vehicles, and control methods for unmanned aerial vehicles.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle equipped with multiple rotary wings (Multi-Rotor UAV) is also called a "drone", "multirotor", or "multicopter", and is widely used for applications including aerial photography, surveying, logistics, and agricultural spraying.

Patent Document No. 1 describes a system including an agricultural tractor, a first unmanned flying body connected to the tractor by a first cable, and a second unmanned flying body connected to the first unmanned flying body by a second cable. According to Patent Document No. 2, power or signals can be supplied from the tractor to the first unmanned flying body and the second unmanned flying body through the first cable and the second cable, allowing the first unmanned flying body and the second unmanned flying body to support the tractor's operations.

### CITATION LIST

### PATENT LITERATURE

Patent Document No. 1: Japanese Patent Application Publication No. 2022-104735

### SUMMARY OF INVENTION

### TECHNICAL PROBLEM

The present disclosure provides systems and methods for enhancing the efficiency of operations performed by unmanned aerial vehicles that are supplied with power or signals through cables.

### SOLUTION TO PROBLEM

In an exemplary and non-limiting embodiment, a control system for an unmanned aerial vehicle of the present disclosure is a control system for a second unmanned aerial vehicle that flies while holding a first cable connected to a first unmanned aerial vehicle performing work and a second cable extending from a cable reeling machine. The control system includes a sensing device that senses the surrounding environment and outputs sensor data, and a control device that controls the operation of the unmanned aerial vehicle. During flight of the second unmanned aerial vehicle, the control device detects the first cable and the second cable based on the sensor data, and when it predicts that at least one of the first cable and the second cable will contact the ground or an obstacle, it changes the trajectory of the second unmanned aerial vehicle to avoid such contact.

In an exemplary and non-limiting embodiment, a control method for an unmanned aerial vehicle of the present disclosure is a control method executed by a computer for controlling a second unmanned aerial vehicle that flies while holding a first cable connected to a first unmanned aerial vehicle performing work and a second cable extending from a cable reeling machine. The control method includes, during flight of the second unmanned aerial vehicle, obtaining sensor data from a sensing device that senses the surrounding environment and outputs sensor data, and based on the sensor data, detecting the first cable and the second cable, and when it is predicted that at least one of the first cable and the second cable will contact the ground or an obstacle, changing the trajectory of the second unmanned aerial vehicle to avoid such contact.

### ADVANTAGEOUS EFFECTS OF INVENTION

According to embodiments of the present disclosure, it is possible to enhance the efficiency of operations performed by a first unmanned aerial vehicle that is supplied with power or signals through cables.

### BRIEF DESCRIPTION OF DRAWINGS

FIG. **1A** is a block diagram schematically showing several examples of rotation drive devices for rotating rotors in an unmanned aerial vehicle equipped with a plurality of rotors.
FIG. **1B** is a plan view schematically showing one example of a basic configuration of an unmanned aerial vehicle equipped with a plurality of rotors.
FIG. **1C** is a side view schematically showing one example of a basic configuration of an unmanned aerial vehicle equipped with a plurality of rotors.
FIG. **1D** is a plan view schematically showing another example of a basic configuration of an unmanned aerial vehicle equipped with a plurality of rotors.
FIG. **2A** is a block diagram showing a basic configuration example of a battery-driven multicopter.
FIG. **2B** is a block diagram showing a basic configuration example of a series hybrid drive type multicopter.
FIG. **2C** is a block diagram showing a basic configuration example of a parallel hybrid drive type multicopter.
FIG. **3** is a block diagram showing an example of a system configuration according to the present embodiment.
FIG. **4** is a diagram for explaining the operation of the system according to the present embodiment.
FIG. **5** is a diagram showing an example of an operation by the second multicopter to avoid contact between cables and obstacles.
FIG. **6** is a diagram showing another example of an operation by the second multicopter to avoid contact between cables and obstacles.
FIG. **7** is a flowchart showing an example of a process executed by the control device of the second multicopter.
FIG. **8** is a diagram schematically showing the first multicopter flying while performing agricultural work within a work area in a field.
FIG. **9** is a block diagram showing an example of the hardware configuration of the control device of each multicopter.
FIG. **10** is a schematic diagram showing an example of a system configuration including multicopters.

### DESCRIPTION OF EMBODIMENTS

An unmanned aerial vehicle equipped with a plurality of rotors includes a rotation drive device that rotates the rotors (hereinafter referred to as "propellers"). Hereinafter, such an unmanned aerial vehicle is referred to as a "multicopter".

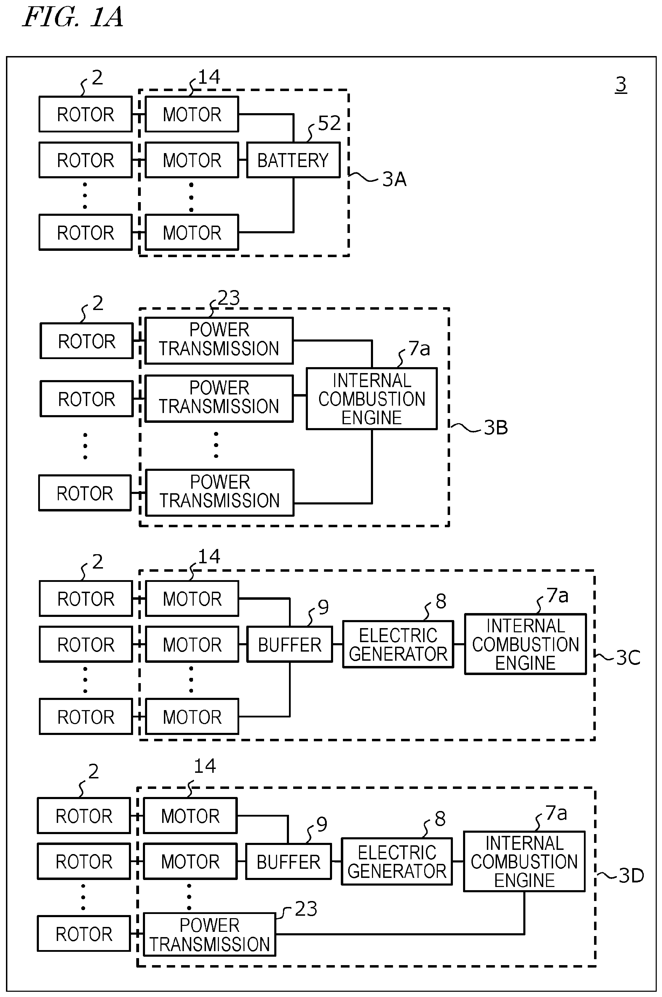

The configuration of rotation drive devices equipped in multicopters exists in various forms. FIG. **1A** is a schematic block diagram showing four examples of rotation drive device **3** in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight.

The second rotation drive device **3B** shown in FIG. **1A** includes a power transmission system **23** mechanically connected to rotor **2,** and an internal combustion engine **7a** that provides driving force (torque) to power transmission system **23.** The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines. Additionally, the number of internal combustion engines **7a** included in rotation drive device **3B** is not limited to one.

The third rotation drive device **3C** shown in FIG. **1A** includes a plurality of motors **14,** a power buffer **9** that stores electric power to be supplied to each motor **14,** an electric generator **8** such as an alternator that generates electric power, and an internal combustion engine **7a** that provides mechanical energy for power generation to the electric generator **8.** While a typical example of power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator **8** and internal combustion engine **7a** in series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides a driving force to the electric generator **8** for power generation, a power transmission system **23** that transmits a driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motor **14.** In the fourth rotation drive device **3D,** since mechanical energy generated by internal combustion engine **7a** can be utilized for rotor rotation without conversion to electrical energy, energy utilization efficiency can be enhanced. This type of drive is called "parallel hybrid drive".

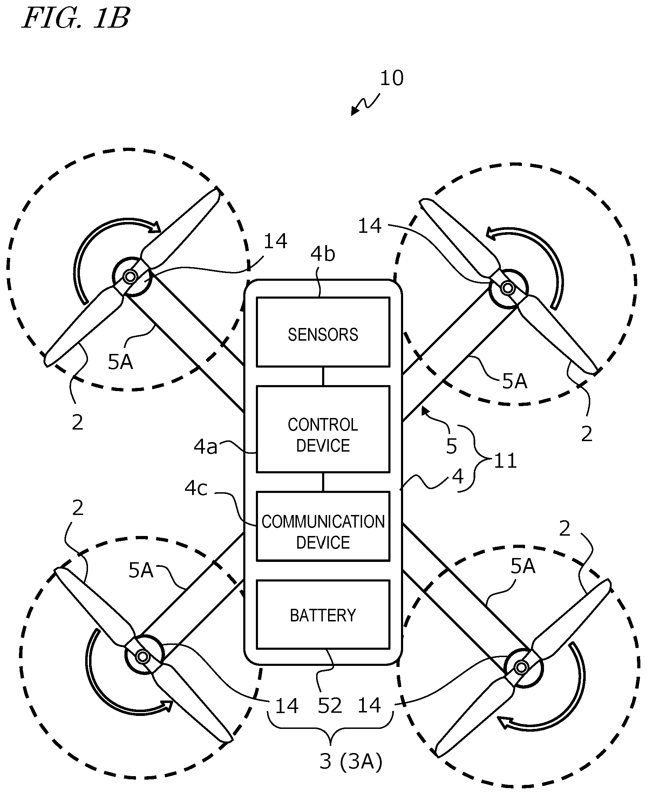

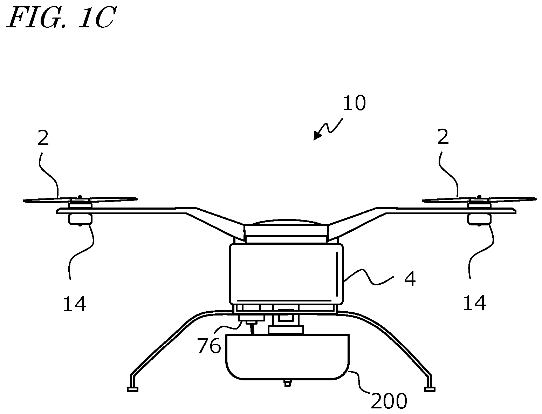

FIG. **1B** is a plan view schematically showing a basic configuration example of multicopter **10.** In the configuration example of FIG. **1B****,** a rotation drive device **3** is equipped with the first rotation drive device **3A** shown in FIG. **1A****.** That is, in this example, rotation drive device **3** (**3A**) includes motors **14** and a battery **52.** FIG. **1C** is a side view schematically showing the multicopter **10.**

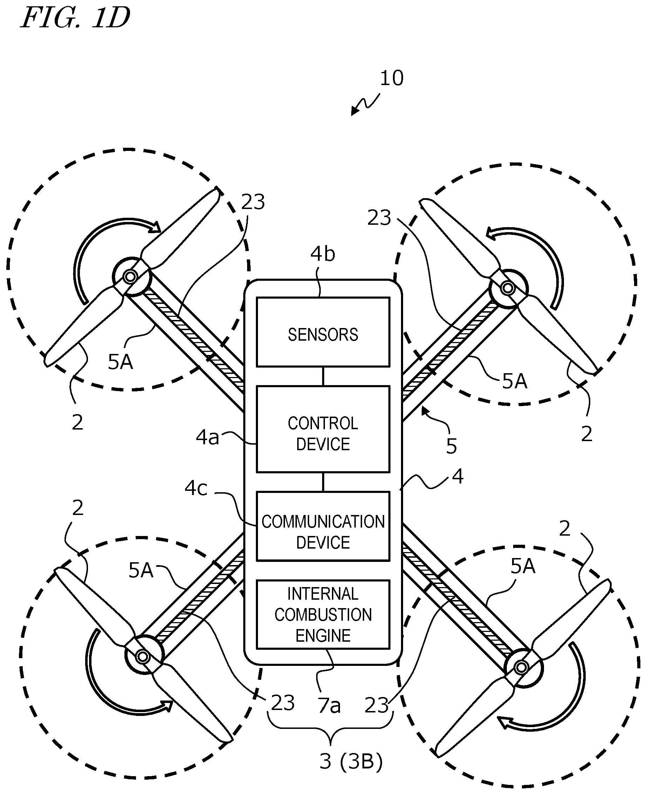

A multicopter **10** shown in FIGS. **1****B** and **1C** includes a plurality of rotors **2,** a main body **4,** and a body frame **5** that supports rotors **2** and main body **4.** The body frame **5** supports the main body **4** at its central portion and supports the plurality of rotors **2** rotatably at the plurality of arms **5A** extending outward from the central portion. The motors **14** that rotate rotors **2** are provided near the ends of each arm **5A.** The main body **4** and body frame **5** may be collectively referred to as "body **11".**

In the example of FIG. **1B****,** the multicopter **10** is a quad-type multicopter (quadcopter) equipped with four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** configured to control the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, angular velocity sensor, geomagnetic sensor, atmospheric pressure sensor, altitude sensor, temperature sensor, flow sensor, imaging device, laser sensor, ultrasonic sensor, obstacle contact sensor, and GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and **2D** or **3D** LiDAR (light detection and ranging).

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute part or all of the functions of the companion computer.

A battery **52** is a secondary battery that is configured to store electric power through charging and supply electric power to motors **14** through discharging. Through the operation of battery **52** and the plurality of motors **14,** a plurality of rotors **2** can be rotationally driven to generate desired thrust.

Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are equipped, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned further inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** includes a plurality of motors **14.** As mentioned above, the rotation drive device **3** may include the internal combustion engine **7a.**

FIG. **1D** is a plan view schematically showing a basic configuration example of a multicopter **10** equipped with the second rotation drive device **3B.** In the example shown in FIG. **1D****,** the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.** Rotation drive device **3B** may include a mechanism for changing the pitch angle of blades of each of the plurality of rotors **2.** In that case, the control device **4a** may adjust the lift generated by each rotor **2** by controlling that mechanism to change the blade pitch angles.

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used for rotating the main rotors and the motors **14** may be used for rotating the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine is used for both thrust generation and power generation. By selectively transmitting driving force (torque) generated by the internal combustion engine to either or both of the rotor and electric generator, it is possible to achieve balanced thrust generation and power generation.

When a multicopter is equipped with an internal combustion engine and uses the internal combustion engine for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration. Note that when the rotation drive device **3** includes a mechanism for changing the pitch angle of blades of each of the plurality of the rotors **2,** the attitude can also be adjusted by changing the pitch angle of each blade.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C****,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may be equipped with mechanisms such as robotic hands. In that case, a single implement **200** can perform various ground operations. When the implement **200** is equipped with space large enough to store materials, the implement **200** can also transport agricultural materials or harvested crops over a wide area. There are various forms of connecting the implement **200** to the multicopter **10.** The multicopter **10** may suspend and tow the implement **200** using a cable. The implement **200** towed by the multicopter **10** can perform ground operations while being towed during flight or hovering of multicopter **10.** The implement **200** during operation may be in the air or on the ground.

In the example shown in FIG. **1C****,** the multicopter **10** is equipped with power supply **76.** The power supply **76** is a device that supplies power to the implement **200** from driving energy sources such as a battery **52** or an electric generator **8** included in the multicopter **10.** Various functions of the implement **200** may be performed using this power. The implement **200** includes actuators such as motors that operate using power obtained from the power supply **76** of the multicopter **10.** The implement **200** preferably includes a battery for storing power. The ESC **16** may be included in the control device **4a.**

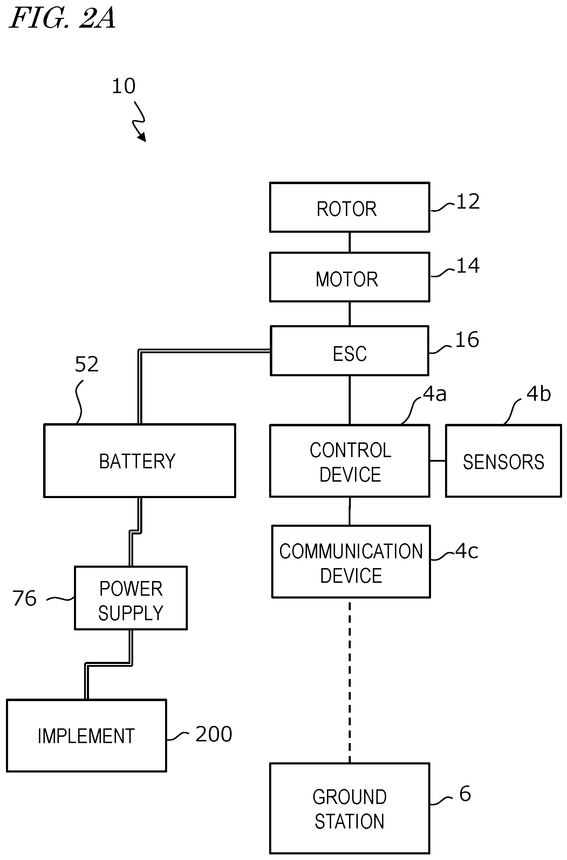

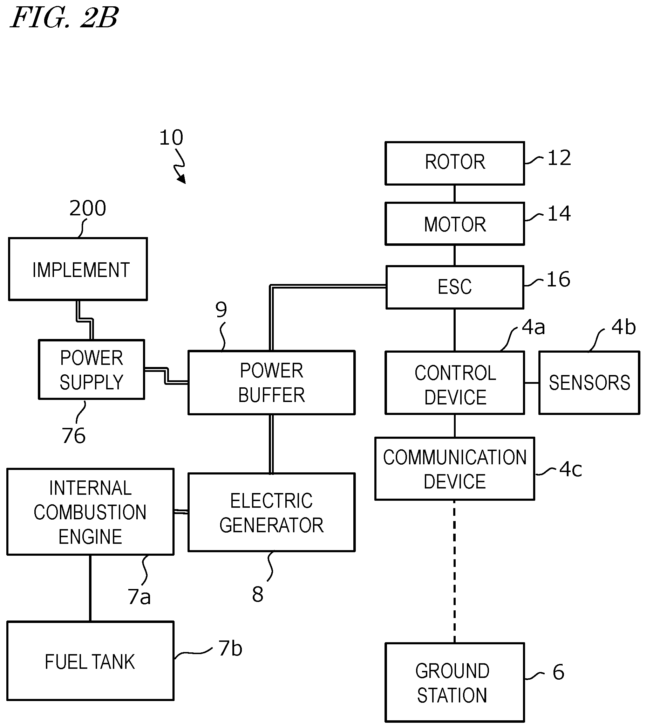

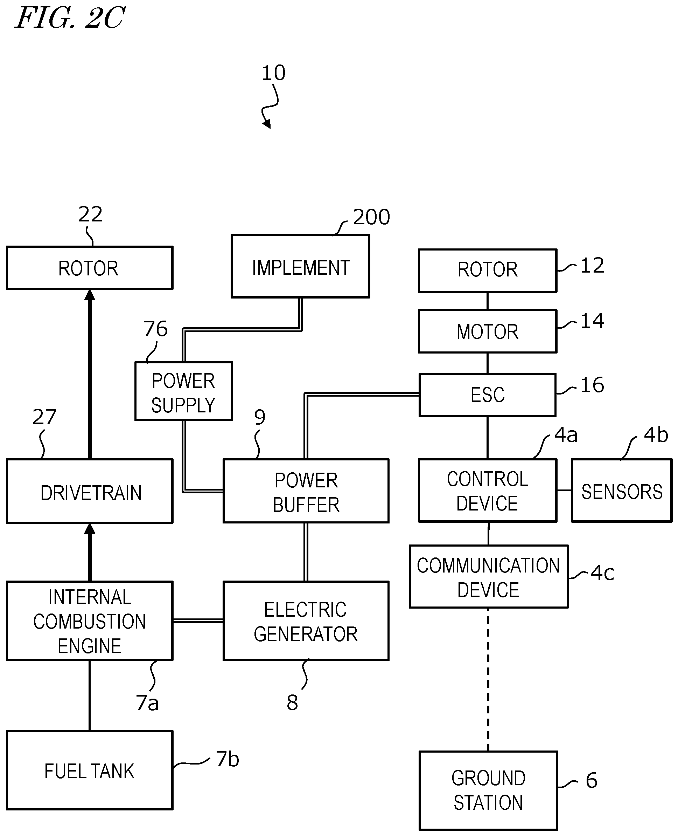

FIG. **2A** shows a block diagram of a basic configuration example of a battery-driven multicopter **10.** The battery-driven multicopter **10** includes a plurality of rotors **12,** a plurality of motors **14,** each driving a respective one of the plurality of rotors **12,** a plurality of ESCs (Electric Speed Controllers) **16** each including a motor drive circuit that drives a respective one of the plurality of motors **14,** a battery **52** that supplies power to each of the plurality of motors **14** through each respective ESC **16,** a control device **4a** for controlling a plurality of ESCs **16** to control attitude while flying, sensors **4b,** a communication device **4c,** and a power supply **76** that is electrically connected to the battery **52.** In FIG. **2A****,** for simplicity, the rotor **12,** the motor **14,** and the ESC **16** are each shown by a single block, but the numbers of rotors **12,** motors **14,** and ESCs **16** are each plural. This also applies to FIGS. **2B** and **2C****.**

The control device **4a** may receive control commands wirelessly from, for example, a ground station **6** on the ground through the communication device **4c.** The number of ground stations **6** is not limited to one, and the grand station 6 may be distributed across a plurality of locations. The communication device **4c** may also wirelessly receive control commands from an operator's remote controller on the ground. The control device **4a** may have functions to automatically or autonomously execute takeoff, flight, obstacle avoidance, and landing operations based on sensor data obtained from the sensors **4b.** The control device **4a** may be configured to communicate with the implement **200** connected to the power supply **76** and obtain signals indicating the state of the implement **200** from the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter **10** shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer **9.** The power buffer **9** is, for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** Like the series hybrid drive type multicopter **10,** the parallel hybrid drive type multicopter **10** includes a plurality of rotors **12,** a plurality of motors **14,** each driving a respective one of the plurality of rotors **12,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid drive type multicopter **10** further includes a drivetrain **27** that transmits driving force from the internal combustion engine **7a,** and the rotor **22** that rotates upon the receiving driving force from the internal combustion engine **7a** through the drivetrain **27.** The rotor **12** and rotor **22** may be distinguished by calling one "first rotor" and the other "second rotor". The number of rotors **22** connected to drivetrain **27** and rotated may be one or two or more.

In the parallel hybrid drive type multicopter **10,** the internal combustion engine **7a** not only drives the electric generator **8** to generate power, but also mechanically transmits energy to the rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** when the electric generator **8** is, for example, a fuel cell, the internal combustion engine **7a** is not an essential component.

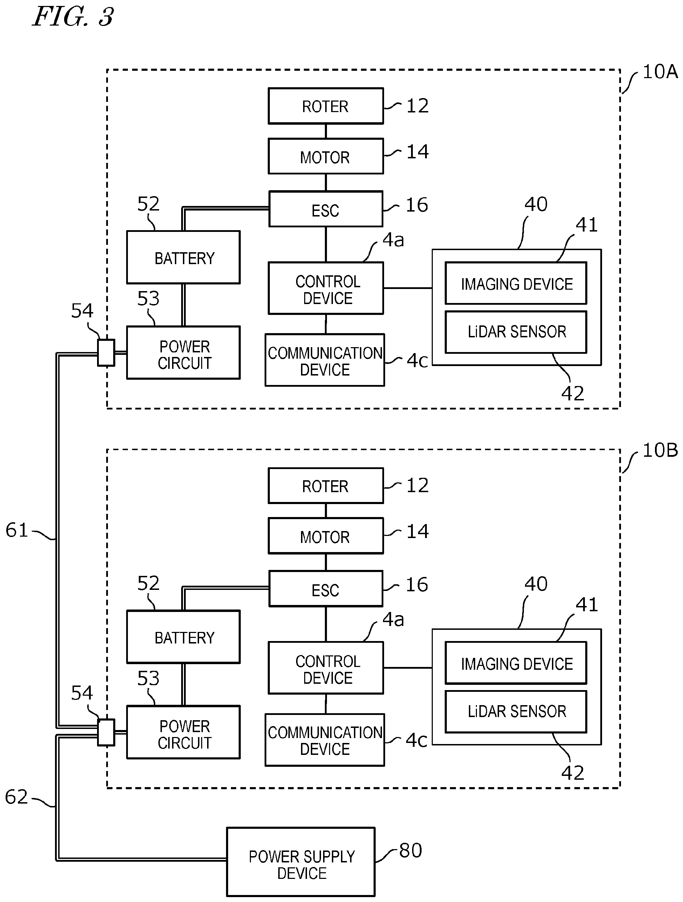

FIG. **3** is a block diagram showing an example of a system configuration according to the present embodiment. The system shown in FIG. **3** includes a first multicopter **10A** (first unmanned aerial vehicle), a second multicopter **10B** (second unmanned aerial vehicle), and a power supply device **80.** The first multicopter **10A** and the second multicopter **10B** are connected by a first cable. The second multicopter **10B** and the power supply device **80** are connected by a second cable **62.**

In the example of FIG. **3****,** each of the first multicopter **10A** and the second multicopter **10B** includes components similar to those of the multicopter **10** shown in FIG. **2A****.** However, the power supply **76** and implement **200** shown in FIG. **2A** are omitted from the illustration in FIG. **3****.** Each multicopter **10A, 10B** may be equipped with a connection device for connecting an implement **200** and a power supply **76** for supplying power to the implement **200.** In FIG. **3****,** an imaging device **41** and a LiDAR sensor **42** are shown as examples of the sensors **4b** shown in FIG. **1****,** and these sensors are collectively called sensing device **40.**

In FIG. **3****,** for simplicity, the rotors **12,** motors **14,** and ESCs **16** in each of the multicopters **10A** and **10B** are each shown by a single block, but the numbers of rotors **12,** motors **14,** and ESCs **16** are each plural. Also, although not shown in FIG. **3****,** the multicopter **10** may be equipped with an internal combustion engine **7a,** a fuel tank **7b,** and an electric generator **8** as shown in FIG. **2B** or FIG. **2C****.** Furthermore, it may be equipped with at least one rotor **22** driven by an internal combustion engine **7a** as shown in FIG. **2C****.** In that case, either "series hybrid" or "parallel hybrid" drive format may be adopted.

In the example of FIG. **3****,** each of the first multicopter **10A** and the second multicopter **10B** further includes a power port **54** and a power circuit **53.** The power port **54** receives power supplied from the power supply device **80** through the first cable **61** or the second cable **62** and sends it to the power circuit **53.** The power circuit **53** is connected between the power port **53** and the battery **52.** The power circuit **53** may include converter circuits that convert the supplied power into direct current power for charging the battery **52.**

The first cable **61** is connected to the power port **54** of the first multicopter **10A** and the power port **54** of the second multicopter **10B.** The second cable **62** is connected to the power port **54** of the second multicopter **10B** and the power supply device **80.** The power port **54** in the first multicopter **10A** functions as a connector to connect the first cable **61.** The power port **54** in the second multicopter **10A** has a first connector to connect the first cable **61** and a second connector to connect the second cable **62.** The power port **54** may be provided on the housing (for example, the main body **4** shown in FIG. **1A**) of each multicopter **10A, 10B.** In the power port **54** of the second multicopter **10B,** the first connection part and the second connection part are electrically connected inside the housing.

The power supply device **80** converts power supplied from an external power source into DC or AC power for transmission and outputs it. The power supply device **80** supplies power to the second multicopter **10B** through the second cable **62.** A portion of this power is also supplied to the first multicopter **10A** through the first cable **61.** That is, in this embodiment, the second multicopter **10B** is powered through the second cable **62** from the power supply device **80** connected to the second cable **62.** On the other hand, the first multicopter **10A** is powered from the power supply device **80** through the first cable **61** and the second cable **62.**

In the example of FIG. **3****,** each of the multicopters **10A** and **10B** is equipped with a control system including a control device **4a** and a sensing device **40.** The sensing device **40** senses the surrounding environment and outputs sensor data. The sensor data may include, for example, image data output from the imaging device **41** or sensor data output from the LiDAR sensor **42.** The control device **4a** controls the operation of each multicopter based on the sensor data. This allows the multicopters **10A** and **10B** to fly in coordination.

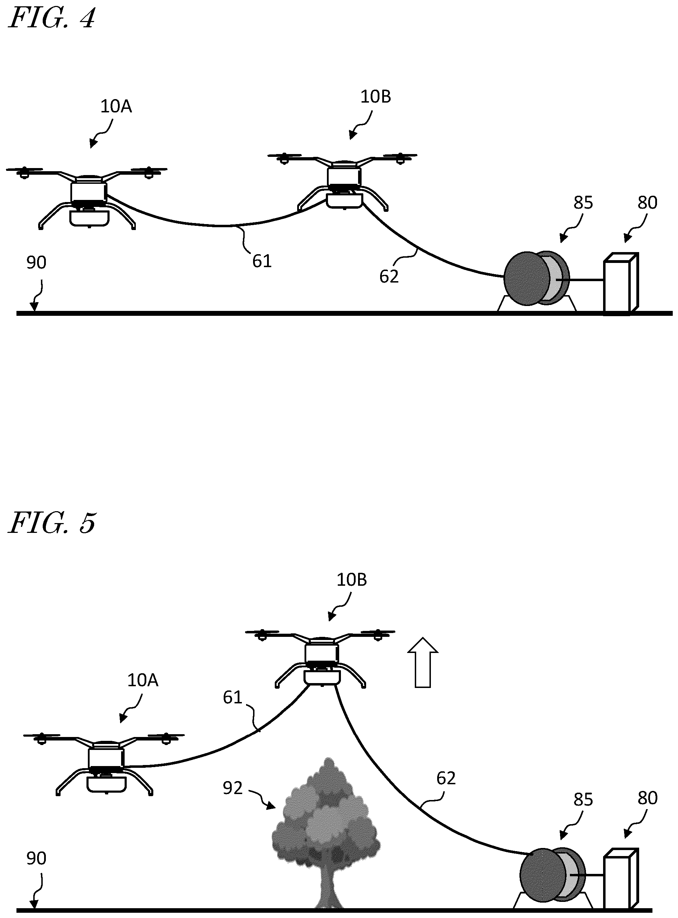

FIG. **4** is a diagram for explaining the operation of the system according to the present embodiment. In the example of FIG. **4****,** a power supply device **80** and a cable reeling machine **85** are placed on the ground **90.** The cable reeling machine **85** may be an electric or manual cable winding machine. The cable reeling machine **85** can wind or unwind the second cable **62** that connects the second multicopter **10B** and the power supply device **80.**

In the example of FIG. **4****,** the first multicopter **10** performs agricultural work such as spraying chemicals above a work area such as a field, and the second multicopter **10B** follows the first multicopter **10A** and supports the flight and work of the first multicopter **10A.** The second multicopter **10B** flies while holding the first cable **61** connected to the first multicopter **10A** and the second cable extending from the cable reeling machine **85.**

In this embodiment, the first end of the first cable **61** is connected to the first multicopter **10A,** and the second end of the first cable **61** and the first end of the second cable **62** are connected to the second multicopter **10B.** The second end of the second cable **62** is connected to the power supply device **80** through the cable reeling machine **85.** This allows driving power to be supplied by wire from the power supply device **80** to the multicopters **10A** and **10B.** Since the multicopters **10A** and **10B** can receive power while flying, long-distance flight is possible without having to land for battery **52** charging.

In this embodiment, each of the first cable **61** and the second cable **62** includes a power line. One end of the power line in the second cable **62** is connected to the power supply device **80** through the cable reeling machine **85.** Each of the first cable **61** and the second cable **62** may include not only a power line but also a communication line. In that case, communication can be conducted between the first multicopter **10A** and the second multicopter **10B,** and between the second multicopter **10B** and the power supply device **80.** In such a configuration, the power supply device **80** also serves as a communication device. Alternatively, each of the first cable **61** and the second cable **62** may include only communication lines without power lines. In that case, a communication device would be placed instead of the power supply device **80,** and one end of the communication line in the second cable **62** would be connected to the communication device through the cable reeling machine.

During flight of the second multicopter **10B,** the control device **4a** of the second multicopter **10B** executes a process to detect the first cable **61** and the second cable **62** based on sensor data output from the sensing device **40** such as the imaging device **41** or the LiDAR sensor **42.** When the control device **4a** predicts that at least one of the first cable **61** and the second cable **62** will contact the ground **90** or an obstacle (for example, an obstacle on the ground **90** or in the air), it changes the trajectory of the second multicopter **10B** to avoid such contact. This prevents the flight and work of the first multicopter **10A** from being hindered by the first cable **61** or the second cable **62** contacting the ground **90** or an obstacle.

As shown in FIG. **3****,** the sensing device **40** may include an imaging device **41** that outputs time-series image data as sensor data through capturing images. In that case, the control device **4a** can predict whether contact will occur based on the time-series image data. Additionally, the sensing device **40** may include a LiDAR sensor **42** that outputs time-series point cloud data as sensor data. In that case, the control device **4a** can predict whether contact will occur based on the time-series point cloud data. The sensing device **40** may include only one of the imaging device **41** and the LiDAR sensor **42,** or it may include both. The control device **4a** may detect the ground or obstacles based on both time-series image data and time-series point cloud data. The algorithm for detecting the ground and obstacles from image data or point cloud data is not limited to a specific one. For example, object detection algorithms utilizing deep learning such as CNN (Convolutional Neural Network) can be used.

The control device **4a** of the first multicopter **10A** can fly the first multicopter **10A** along a predetermined target path based on position information output from a positioning device such as a GNSS receiver. Such an operating mode is called an "autonomous operation mode". The control device **4a** of the first multicopter **10A** can also operate in a "manual operation mode" that responds to commands from a control device used by a user to fly the multicopter **10A.**

The control device **4a** of the second multicopter **10A** can also operate in autonomous operation mode and manual operation mode. In autonomous operation mode, the control device **4a** of the second multicopter **10B** flies the second multicopter **10B** along a predetermined target path based on position information output from a positioning device such as a GNSS receiver. The control device **4a** of the second multicopter **10B** can also operate in an "automatic following mode" where it further detects the first multicopter **10A** based on sensor data and makes the second multicopter **10B** follow the first multicopter **10A** based on the detection result of the first multicopter **10A.** This allows the second multicopter **10B** to automatically follow the first multicopter **10A** without piloting the second multicopter **10B.** The control device **4a** of the second multicopter **10B** may be configured to execute operations to avoid contact between cables and the ground or obstacles in autonomous operation mode and automatic following mode. Even in manual operation mode, the control device **4a** of the second multicopter **10B** may perform operations to avoid contact regardless of commands from the control device if it predicts that cables will contact the ground or obstacles.

FIG. **5** is a diagram showing an example of an operation by the second multicopter to avoid contact between cables and obstacles. In the example of FIG. **5****,** an obstacle **92** exists near the flight paths of the first multicopter **10A** and the second multicopter **10B.** In this example, the obstacle **92** is a tree. The obstacle **92** is not limited to trees and may be other objects or people on the ground **90,** or birds or other unmanned aerial vehicles in the air.

Here, assume that the first multicopter **10A** automatically flies along a predetermined target path, and the second multicopter **10B** follows the first multicopter **10A.** In the example of FIG. **5****,** if normal flight control were performed, the first cable **61** and the second cable **62** would contact the obstacle **92,** hindering the flight of the first multicopter **10A.** Therefore, the control device **4a** of the second multicopter **10B** determines whether at least one of the first cable **61** and the second cable **62** will contact the obstacle **92** based on sensor data, and if contact is predicted, it changes the trajectory of the second multicopter **10B** to avoid such contact. In the example of FIG. **5****,** the control device **4a** avoids contact between cables **61** and **62** and the obstacle **92** by increasing the rotation speed of each rotor to make the second multicopter **10B** ascend.

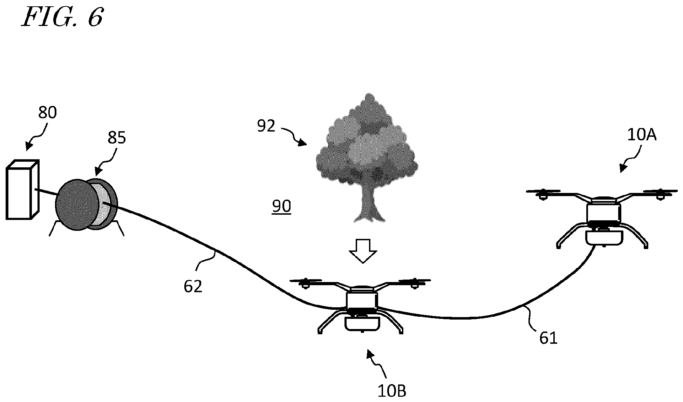

FIG. **6** is a diagram showing another example of an operation by the second multicopter **10B** to avoid contact between cables **61** and **62** and the obstacle **92.** In the example of FIG. **6****,** the first multicopter **10A** and the second multicopter **10B** are flying while maintaining a relatively low altitude. In such cases, the control device **4a** of the second multicopter **10B** may change the trajectory of the second multicopter **10B** to deviate in a direction parallel to the ground **90** to avoid contact between the first cable **61** or the second cable **62** and the obstacle **92.**

While FIGS. **5** and **6** both show examples of control to avoid contact between cables **61** and **62** and the obstacle **92,** similar control can be employed to avoid contact between cables **61** and **62** and the ground **90.** Note that each of the multicopters **10A** and **10B** also has a function to detect and avoid obstacles to prevent itself from contacting obstacles.

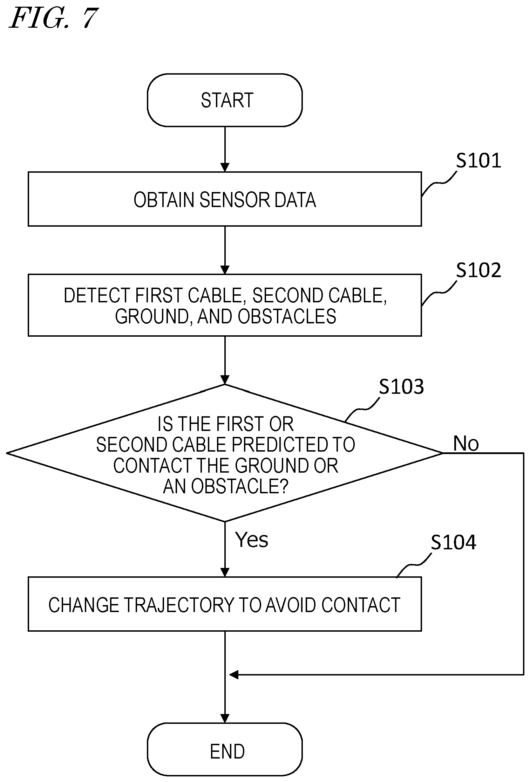

FIG. 7 is a flowchart showing an example of a process executed by the control device **4a** of the second multicopter **10B.** During flight of the second multicopter **10B,** the control device **4a** obtains sensor data output from the sensing device **40** (step S101). As mentioned earlier, the sensor data may be, for example, time-series image data output from the imaging device **41** or time-series point cloud data output from the LiDAR sensor **42.** Next, the control device **4a** detects the first cable, the second cable, the ground, and obstacles based on the obtained sensor data (step S102). Detection may be performed using any object detection algorithm as mentioned earlier. Based on the detection results in step S102, the control device **4a** determines whether the first cable **61** or the second cable **62** is predicted to contact the ground or an obstacle (step S103). For example, the control device **4a** can detect the movements of the first cable **61,** the second cable **62,** and obstacles based on time-series image data or point cloud data, and based on those movements, it can predict whether contact will occur within a predetermined time (for example, from a few seconds to about a dozen seconds) if the current flight is continued. If contact is predicted, the control device **4a** changes the trajectory of the second multicopter **10B** to avoid contact. For example, it changes the trajectory so that cables **61** and **62** move away from the detected ground or obstacle and do not contact other objects. If it is predicted that no contact will occur in step S103, the process of step S104 is not performed, and the current flight control is continued.

The control device **4a** repeats the operation shown in FIG. **7** during the flight of the second multicopter **10B.** This allows avoiding contact between cables **61** and **62** and the ground or obstacles, enabling smooth execution of flight and work by the first multicopter **10A** and the second multicopter **10B.**

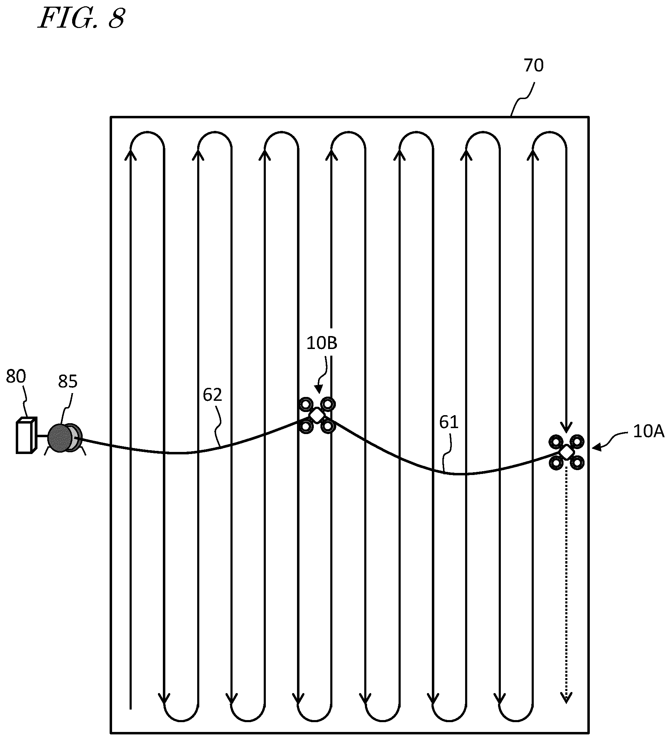

Next, an example of agricultural work operation by the first multicopter **10A** and the second multicopter **10B** will be explained with reference to FIG. **8****.**

FIG. **8** is a diagram schematically showing the first multicopter **10A** flying while performing agricultural work within a work area **70** in a field. In FIG. 8, the arrow line shown within the work area **70** schematically indicates the flight path that the first multicopter **10A** has passed through by autonomous operation mode. In autonomous operation mode, the first multicopter **10A** is controlled to fly along a predetermined target path. In autonomous operation mode, the control device **4a** of the first multicopter **10A** flies the first multicopter **10A** along the target path based on the position of the first multicopter **10A** measured by the GNSS receiver and the target path set above the work area **70.** The target path may be predetermined by a user, and its information is recorded in the storage device **4e.** The user can set the work area **70** and the target path through operations using a GUI (Graphical User Interface) that includes a map of the field displayed on a setting information terminal.

In the example of FIG. **8****,** a power supply device **80** and a cable reeling machine **85** are installed on the ground surrounding the work area **70.** The first multicopter **10A** and the second multicopter **10B** are connected by the first cable **61.** The second multicopter **10B** and the power supply device **80** are connected by the second cable **62** through the cable reeling machine **85.** While the first multicopter **10A** performs agricultural work while flying along the target path, the second multicopter **10B** holds cables **61** and **62** while adjusting its position so that cables **61** and **62** do not contact the ground or obstacles. This prevents the flight and work of the first multicopter **10A** from being hindered by contact between cables **61** and **62** and the ground or obstacles, and prevents crops in the work area **70** from being damaged by cables **61** and **62.**

In this example, only the first multicopter **10A** performs agricultural work, but the second multicopter **10B** may also perform agricultural work while holding cables **61** and **62.** The work can also be made more efficient by having the second multicopter **10B** work in coordination with the first multicopter **10A.**

The work performed by multicopters **10A** and **10B** is not limited to examples such as shown in FIG. **8** and may be work performed over a wide area including multiple fields, such as supplying and transporting agricultural materials, transporting harvested crops, monitoring crop growth conditions, surveying, and map creation. When multicopters **10A** and **10B** transport agricultural materials or harvested crops, for example, they may fly automatically or autonomously, or by remote control, over areas outside fields (including areas with forests, rivers, etc.).

In this embodiment, the first cable **61** and the second cable **62** are two independent cables, but the first cable **61** and the second cable **62** may be different parts of a single cable. That is, the first cable **61** may be the portion of a single cable between one end connected to the first multicopter **10A** and the position held by the second multicopter **10B.** Also, the second cable **62** may be the portion of that single cable between the position stored in the cable reeling machine and the position held by the second multicopter **10B.** In that case, the single cable may not be connected to the second multicopter **10B,** and the second multicopter **10B** may simply hold the intermediate position of the single cable by a mechanism such as suspending.

Also, in this embodiment, two unmanned aerial vehicles (multicopters **10A** and **10B**) operate in coordination, but three or more unmanned aerial vehicles may operate in coordination. In that case, two or more unmanned aerial vehicles may hold cables connected to other unmanned aerial vehicles, similar to the second multicopter **10B** in this embodiment, and perform control to avoid contact between cables and the ground or obstacles.

The control device **4a** in each of the multicopters **10A** and **10B** according to the embodiment of the present disclosure may be realized by a digital computer system programmed to execute the aforementioned processes.

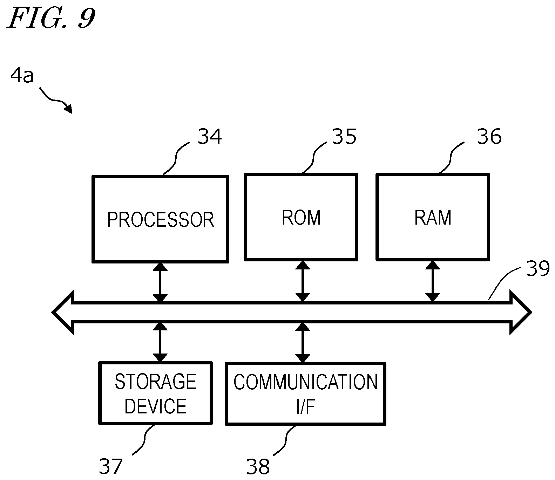

FIG. 9 is a block diagram showing an example of the hardware configuration of the control device **4a.** The control device **4a** includes a processor **34,** ROM (Read Only Memory) **35,** RAM (Random Access Memory) **36,** storage device **37,** and communication I/F **38.** These components are interconnected via a bus **39.**

The processor **34** is one or more semiconductor integrated circuits, also referred to as a central processing unit (CPU) or microprocessor. The processor **34** sequentially executes computer programs stored in ROM **35** to implement the aforementioned processing. The processor **34** is broadly interpreted to include terms such as FPGA (Field Programmable Gate Array) with CPU, GPU (Graphic Processor Unit), ASIC (Application Specific Integrated Circuit), or ASSP (Application Specific Standard Product).

The ROM **35** is, for example, a writable memory (for example, PROM), rewritable memory (for example, flash memory), or read-only memory. The ROM 35 stores programs that control the operation of the processor. The ROM 35 need not be a single recording medium but may be a collection of multiple recording media. Part of the multiple media collection may be removable memory.

The RAM **36** provides a work area for temporarily expanding programs stored in the ROM **35** during boot-up. The RAM **36** need not be a single recording medium but may be a collection of multiple recording media.

The communication I/F **38** is an interface for communication between the control device **4a** and other electronic components or electronic control units (ECUs). For example, the communication I/F **38** may perform wired communication complying with various protocols. The communication I/F **38** may perform wireless communication complying with Bluetooth^{®} standards and/or Wi-Fi^{®} standards. Both standards include wireless communication standards utilizing the 2.4 GHz frequency band.

The storage device **37** may be, for example, a semiconductor memory, magnetic storage device, or optical storage device, or a combination thereof. The storage device **37** can store, for example, map data useful for autonomous flight of the multicopter **10,** and various sensor data acquired by the multicopter **10** during flight.

It should be noted that, as mentioned earlier, the control device **4a** may include, for example, a flight control device such as a flight controller and a higher-level computer (companion computer). The companion computer may execute each of the aforementioned processes and provide flight-related commands to the flight controller based on the results of those processes.

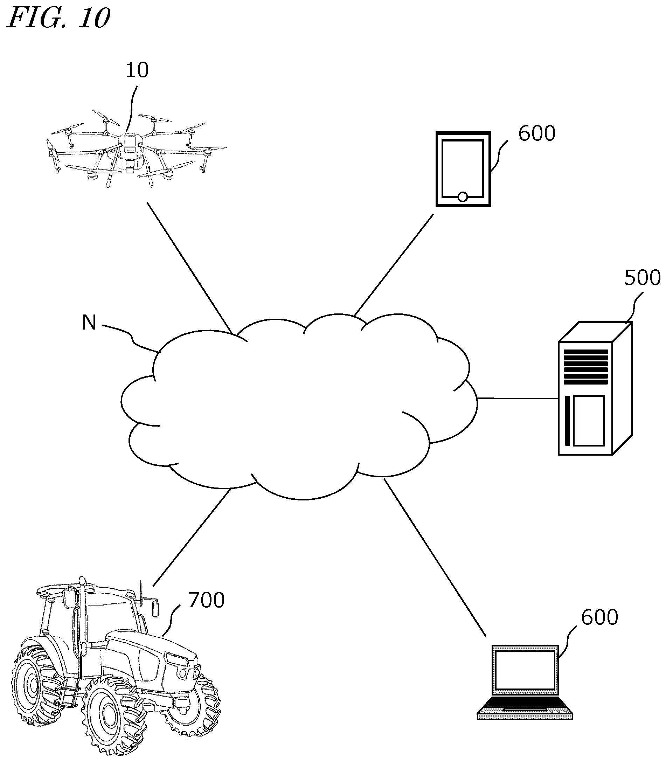

FIG. **10** is a schematic diagram showing an example of a system configuration including multicopters **10.** Some or all of the functions of the control device **4a** may be implemented by one or more servers (computers) **500** or terminal devices (including portable and fixed types) **600** connected to the communication device **4c** of the multicopter **10** via a communication network **N.** Agricultural machines **700** such as tractors may be connected to this communication network **N,** and communication may take place between the multicopter **10** and agricultural machines **700.** Some of the data used for processing by the control device **4a** and control signals for the multicopter **10** may be provided to the multicopter **10** from agricultural machines **700** through the communication network **N.**

Systems providing various functions in the above embodiments can also be attached later to multicopters that do not have those functions. Such systems can be manufactured and sold independently of multicopters. Computer programs used in such systems can also be manufactured and sold independently of multicopters. Computer programs may be provided, for example, stored on computer-readable non-transient storage media. Computer programs may also be provided through downloading via telecommunications lines (for example, the Internet).

As described above, the present disclosure includes control systems, control methods, and unmanned aerial vehicles described in the following items.

[Item 1] A control system for a second unmanned aerial vehicle configured to fly while holding a first cable connected to a first unmanned aerial vehicle configured to perform work and a second cable extending from a cable reeling machine, the control system comprising:
a sensing device configured to sense a surrounding environment and output sensor data; and
a control device configured to control operation of the unmanned aerial vehicle, wherein
the control device is configured to detect the first cable and the second cable based on the sensor data during flight of the second unmanned aerial vehicle, and, upon predicting that at least one of the first cable and the second cable will contact the ground or an obstacle, to change a trajectory of the second unmanned aerial vehicle to avoid the contact.

[Item 2] The control system according to Item 1, wherein
the sensing device includes an imaging device configured to output time-series image data as the sensor data through capturing images, and
the control device is configured to predict whether contact will occur based on the time-series image data.

[Item 3] The control system according to Item 1 or 2, wherein
the sensing device includes a LiDAR sensor configured to output time-series point cloud data as the sensor data, and
the control device is configured to predict whether contact will occur based on the time-series point cloud data.

[Item 4] The control system according to any one of Items 1 to 3, wherein the control device is configured to:
further detect the first unmanned aerial vehicle based on the sensor data; and
upon detecting the first unmanned aerial vehicle, cause the second unmanned aerial vehicle to follow the first unmanned aerial vehicle.

[Item 5] The control system according to any one of Items 1 to 4, wherein
each of the first cable and the second cable includes a power line, and
one end of the power line in the second cable is connected to a power supply device through the cable reeling machine.

[Item 6] The control system according to any one of Items 1 to 5, wherein
each of the first cable and the second cable includes a communication line, and
one end of the communication line in the second cable is connected to a communication device through the cable reeling machine.

[Item 7] The control system according to any one of Items 1 to 6, wherein
each of the first cable and the second cable is a different portion of a single cable,
the first cable is a portion of the single cable between one end connected to the first unmanned aerial vehicle and a position held by the second unmanned aerial vehicle, and
the second cable is a portion of the single cable between a position stored in the cable reeling machine and the position held by the second unmanned aerial vehicle.

[Item 8] The control system according to any one of Items 1 to 6, wherein
the second unmanned aerial vehicle includes a housing including a first connector to connect the first cable and a second connector to connect the second cable, and
the first connection part and the second connection part are electrically connected inside the housing.

[Item 9] The control system according to Item 8, wherein
the second unmanned aerial vehicle is configured to be powered through the second cable from a power supply device that is connected to the second cable, and
the first unmanned aerial vehicle is configured to be powered through the first cable and the second cable from the power supply device.

[Item 10] An unmanned aerial vehicle comprising:
the control system according to any one of Items 1 to 9; and
a plurality of rotors configured to be controlled by the control system.

[Item 11] A control method executed by a computer that controls a second unmanned aerial vehicle configured to fly while holding a first cable connected to a first unmanned aerial vehicle configured to perform work and a second cable extending from a cable reeling machine, the control method comprising, during flight of the second unmanned aerial vehicle:
obtaining sensor data from a sensing device configured to sense a surrounding environment and output sensor data;
detecting the first cable and the second cable based on the sensor data, and upon predicting that at least one of the first cable and the second cable will contact the ground or an obstacle, changing a trajectory of the second unmanned aerial vehicle to avoid the contact.

### INDUSTRIAL APPLICABILITY

The unmanned aerial vehicles according to the present disclosure may be widely utilized not only for applications such as aerial photography, surveying, logistics, and agricultural spraying, but also for ground work related to agricultural work, and transportation of harvested crops and agricultural materials.

### REFERENCE SIGNS LIST

**2...** rotor (propeller), **3...** rotation drive device, **4...** main body, **4a...** control device, **4b...** sensors, **4c...** communication device, **5...** body frame, **10, 10A, 10B...** multicopter, **12...** sub-rotor, **14...** motor, **16...** ESC, **22...** main rotor, **52...** battery, **61, 62...** cable, **70...** work area, **80...** power supply device, **85...** cable reeling machine

## Claims

1. A control system for a second unmanned aerial vehicle configured to fly while holding a first cable connected to a first unmanned aerial vehicle configured to perform work and a second cable extending from a cable reeling machine, the control system comprising:
a sensing device configured to sense a surrounding environment and output sensor data; and
a control device configured to:
control operation of the unmanned aerial vehicle;
detect the first cable and the second cable based on the sensor data during flight of the second unmanned aerial vehicle; and
upon predicting that at least one of the first cable and the second cable will contact the ground or an obstacle, change a trajectory of the second unmanned aerial vehicle to avoid the contact.

2. The control system according to Claim 1, wherein
the sensing device includes an imaging device configured to output time-series image data as the sensor data through capturing images, and
the control device is configured to predict whether contact will occur based on the time-series image data.

3. The control system according to Claim 1 or 2, wherein
the sensing device includes a LiDAR sensor configured to output time-series point cloud data as the sensor data, and
the control device is configured to predict whether contact will occur based on the time-series point cloud data.

4. The control system according to any one of Claims 1 to 3, wherein the control device is configured to:
further detect the first unmanned aerial vehicle based on the sensor data; and
upon detecting the first unmanned aerial vehicle, cause the second unmanned aerial vehicle to follow the first unmanned aerial vehicle.

5. The control system according to any one of Claims 1 to 4, wherein
each of the first cable and the second cable includes a power line, and
one end of the power line in the second cable is connected to a power supply device through the cable reeling machine.

6. The control system according to any one of Claims 1 to 5, wherein
each of the first cable and the second cable includes a communication line, and
one end of the communication line in the second cable is connected to a communication device through the cable reeling machine.

7. The control system according to any one of Claims 1 to 6, wherein
each of the first cable and the second cable is a different portion of a single cable,
the first cable is a portion of the single cable between one end connected to the first unmanned aerial vehicle and a position held by the second unmanned aerial vehicle, and
the second cable is a portion of the single cable between a position stored in the cable reeling machine and the position held by the second unmanned aerial vehicle.

8. The control system according to any one of Claims 1 to 6, wherein
the second unmanned aerial vehicle includes a housing including a first connector to connect the first cable and a second connector to connect the second cable, and
the first connection part and the second connection part are electrically connected inside the housing.

9. The control system according to Claim 8, wherein
the second unmanned aerial vehicle is configured to be powered through the second cable from a power supply device that is connected to the second cable, and
the first unmanned aerial vehicle is configured to be powered through the first cable and the second cable from the power supply device.

10. An unmanned aerial vehicle comprising:
the control system according to any one of Claims 1 to 9; and
a plurality of rotors configured to be controlled by the control system.

11. A control method executed by a computer that controls a second unmanned aerial vehicle configured to fly while holding a first cable connected to a first unmanned aerial vehicle configured to perform work and a second cable extending from a cable reeling machine, the control method comprising, during flight of the second unmanned aerial vehicle:
obtaining sensor data from a sensing device configured to sense a surrounding environment and output sensor data;
detecting the first cable and the second cable based on the sensor data, and
upon predicting that at least one of the first cable and the second cable will contact the ground or an obstacle, changing a trajectory of the second unmanned aerial vehicle to avoid the contact.
